# EUROPEAN PATENT SPECIFICATION

(11) **EP 1 737 988 B1**
(45) Date of publication and mention of the grant of the patent: **08.07.2009**
(21) Application number: 04814750.8
(22) Date of filing: 16.12.2004
(51) Int. Cl.: C21D 1/10

(54) **ENERGIZATION CYCLE COUNTER FOR INDUCTION HEATING TOOL**
ERREGUNGSZYKLUSZÄHLER FÜR INDUKTIONSHEIZWERKZEUG
COMPTEUR DE CYCLES D'EXCITATION POUR OUTIL DE CHAUFFAGE PAR INDUCTION

(30) Priority: 02.01.2004 US 750640; 29.09.2004 US 953800; 26.10.2004 US 973561
(43) Date of publication of application: 03.01.2007
(73) Proprietor: Ajax Tocco Magnethermic Corporation, Warren, OH 44482 (US)
(72) Inventor: Bartz, Kathleen M., Clinton, MI 48038 (US)
(74) Representative: Muttock, Neil John
(86) International application number: PCT/US2004/042605
(87) International publication number: WO 2005/069694

(56) References cited:
- US-A- 3 793 509
- US-A- 4 145 592
- US-A- 5 991 355
- US-A1- 2001 004 983
- US-B1- 6 229 127

## Description

### TECHNICAL FIELD

The present invention relates generally to a counting sensor for use in conjunction with an induction heat treating process. More particularly, the present invention relates to a system for counting the cycles of an individual inductor coil or the duration of energization of the induction heating coil or both and maintaining and transmitting this data to a remote unit location or self contained unit within the counting sensor.

### BACKGROUND OF THE INVENTION

The induction heat treating process is used in various applications for hardening, and annealing of metals. The process includes applying energy directly to metals and other conductive materials via an alternating electric current passing through an induction heating coil positioned in close proximity to a workpiece. The induction heating process is applicable to both continuous and component heating. Continuous heating relates to processes such as wire and strip manufacturing and includes induction heating coils used for forging products, billet heaters and tube annealing. Component heating is describes a process for heating one component, or workpiece at a time. Gears and axle shafts are generally hardened by component induction heating processes.

A common use for component induction heating is case hardening of carbon steel, or alloy parts for use in the formation of automobiles, farm equipment, airplanes and other production apparatuses. Component induction heating rapidly heats the workpiece In a short period of time. The workpiece is then quenched and a hardened surface, or through hardened part is formed. The depth of the hardened surface is regulated by the frequency of current, temperature of the part surface, and quenching of the part.

Additionally, induction heating coils may be used to continuously heat a workpiece, or billet, prior to stamping or other fabrication process. The billet is heated gradually to a desired temperature by passing through an extended induction heating coil or a series of induction heating coils of increasing temperature. The series of induction heating coils, or alternatively a single coil, will heat the billet by maintaining energization over the duration of the continuous heating process. More specifically, a helically wound induction heating coil or a series of coils may be used to continuously heat a billet prior to stamping. Each induction heating coil, or series of coils, is encased in refractory material to help retain the heat necessary to preheat a billet and act as a heat shield to protect the coil from excess heat. This continuous process may require an induction heating coil to be energized for extended time periods of 2000 - 4000 hours, or a lifespan of approximately one month.

Much of the prior art is directed to systems for measuring and maintaining the temper and surface hardness to insure proper performance and quality control of the heated parts. The concept of monitoring an induction heating cycle is disclosed in U.S. Pat. No. 4,897,518 and 4,816,633 to Mucha et al. and for monitoring the current in an induction heating coil is disclosed in U.S. Pat. No. 5,434,389 to Griebel. Similarly, U.S. Pat Nos. 3,746,825 and 5,250,776 to Pfaffmann disclose a method for measuring input energy and temperature and heating rate of a workpiece, respectively. U.S. Pat. No. 6,455,825 to Bentley et al. discloses the use of miniature magnetic sensors strategically placed about the workpiece to monitor changes in the magnetic properties of the workpiece as it heats up during induction heating and cools down during quenching.
US 2001/0004983 discloses In-Situ Closed Loop Temperature Control for Induction Tempering in which an induction coil is used to temper a part in-situ at the heat treating location.

Both conventional induction heat treating processes are detrimental to the perishable heat treating tool. The tool, or inductor coil, is designed and shaped specifically to the workpiece undergoing the heat treatment. An induction heating machine may include a specifically designed coil, or multiple identical coils mounted to the machine, or various coil designs mounted to a single machine in series, all used for heating or hardening various workpieces during production. Each coil may be formed of multiple copper parts and flux concentrators that are brazed or attached to form an inductor assembly. The joints have a limited life cycle and are prone to failure or leakage and must be repaired. Further, arcing often occurs where there are small air gaps between the tool and the workpiece causing stress cracks and damage to the coil. During continuous heat induction, the surrounding refractory material tends to breakdown due to the heat or other property failures. These examples only exacerbate the already short tooling life of a coil and lead to costly repairs. Each time tooling is changed, the induction heating machine and the heat treated parts must be validated to ensure that the new coil is performing per required specifications. Tooling and production shutdown are costly and time-consuming. Employing multiple coils with each machine, without knowing the cycle history of each individual coil increases the opportunity for production interruption.

Currently, an end user/purchaser of induction heating equipment will contract an induction equipment supplier (OEM) to design an optimal coil configuration for the part requiring induction heating. Based on the quality of material used and quality of workmanship, the coil will need repairing after an unknown amount of cycles or duration of energization. More often than not, the end user will choose to send the coil to an after market company for the repair based mainly on the cost of the repair. A costly inventory of inductor coils is maintained at the production site for immediate replacement when a coil fails during production. Occasionally a replacement coil is removed from inventory without ordering new replacements, thus creating an immediate need for a new replacement coil.

A blind count is recorded of how many times the induction heating machine is cycled for purposes of determining the amount of parts that have been treated. However, no record is kept of how many times each individual inductor coil is energized, or cycled, or the duration of energization of the cell during a heating process. Nor is a record kept of how many different inductor coils are used in a multiple coil machine. Therefore, no hard record is created to determine the cycle life of each inductor coil, i.e. how many cumulative cycles in the life of an average inductor coil or the duration of time the coil has been energized for heating a workpiece. Best estimates are that a perishable coil must be replaced approximately every 5,000 to 100,000 cycles based on each individual application or every 2,000 to 4,000 hours of prolonged energization. These tool costs are incorporated into the overall cost of each manufactured part.

When an inductor coil fails, production stops. The coil must be changed and the machine and subsequently heat treated parts must be validated. This requires the transportation and quarantine of the parts to a separate storage area for analysis of quality control. If the parts do not meet the specified criteria, they are scrapped, resulting in an expensive waste of material and labor. The alternative option is to wait until the metallurgical results are verified before running production, this may take hours.

### SUMMARY OF THE INVENTION

In one aspect of the invention there is provided a method of monitoring the duration of energization attributable to an induction heating coil according to claim 1. In another aspect of the invention there is provided a method for monitoring the amount of cycles attributable to an induction coil according to claim 9. In one embodiment, there is provided an induction heat treating process with a sensor for counting the amount of cycles attributable to an individual inductor coil. Additionally, the sensor may be used to count the duration of energization of a coll, or both. The sensor is preferably a counting mechanism remotely located from the induction coil assembly and triggered by a signal, such as a designated radio frequency, emitted from an identifying tag attached to, embedded within or located within the area of the induction heating coil or bus bar assembly. The induction, coif identifying tag triggers the remote sensor in response to the change in voltage generated as the coil is energized. The remote sensor may be any external data maintenance source, such as a control cabinet or personal computer for example, to register a consecutive count of cycles or duration of energization or both for the identified coil.

Alternatively, the sensor may be attached to or embedded within the induction heating coil or bus bar and is triggered by and responds to the change in voltage generated as the coil is energized as described in the parent application entitled ENERGIZATION CYCLE COUNTER FOR lNDUCTION HEATING TOOL and having Serial No. 10/750,640, filed January 2, 2004, now U.S. Patent No. 6.815.650, and the Continuation-in-part application entitled ENERGIZATION CYCLE COUNTER FOR INDUCTION HEATING TOOL and having Serial No. 10,953,800, filed September 29,2004, now U.S. Patent No. 6,965,098

Alternative designs may measure current, magnetic field, frequency and/or temperature differentials on each individual coil. As described above, the remote sensor is a counting mechanism triggered by a signal emitted from an identifying tag, such as a transmitter, attached to, embedded within or located within the area of the induction heating coil or bus bar assembly. The identifying, tag is particularly advantageous and applicable where the induction heating coil is located within an enclosed environment that may not be accessed without tripping an emergency stop or the like. The remote sensor may take the form of any type of external data maintenance source, such as a control cabinet or personal computer for example, to register a consecutive count of cycles or duration of energization or both for the identified coil. The data culled from the remote sensor or other data maintenance and retrieval sources provides useful information for determining the lifespan of an induction heating coil. Predicting the lifespan of a coil optimizes production by anticipating failure and replacement of a coil during a predetermined down time, limiting on-site inventory, and revolutionizing the repair billing cycle based on a per cycle cost while decreasing overall production costs:

Initially, the sensor is used to measure the amount of cycles sustained by each individual coil until failure of the coil to establish a base line life span of a typical industrial application. In addition to, or alternatively, the sensor is used to measure the duration of a coil energization period. To do this, a sensor is preferably provided remotely from the induction coil assembly and is triggered by an induction coil identifying tag located within the surrounding area of the induction coil assembly capable of monitoring the change in voltage generated as the coil is energized. When the machine is activated, the induction coil identifying tag emits a signal to the remote sensor, which in turn responds to the voltage change across the bus bar and tallies a single cycle. Each activation, or cycle, of the induction heat treating coil registers a consecutive cycle. Similarly, when the sensor is measuring duration of energization for a continuous heating process, time is measured by the sensor from the beginning of a cycle through deactivation of the induction heating coil. The sensor tallies and stores the amount for reading. The remote sensor may also transmit to a second external device such as a bar code reader, hand held personal computer, cellular telephone, or any other device capable of receiving such transmitted information.

Once an average baseline lifespan for each coil design is established, whether on a per cycle or duration basis, the monitoring system of the present invention can provide useful information to optimize the operation of each induction heating machine and overall production. The monitoring system includes providing an induction heating coil with an induction coil identifying tag attached to, embedded within each coil or within the surrounding area of the induction heating coil and access to a remote counting sensor. Preferably, a coil monitoring company provides an induction heating coil with an induction coil identifying tag and access to a remote counting sensor for lease, rather than purchase, by a company for use during production. As the sensor tallies cycles or duration for each coil, the coil monitoring company as proprietor of the monitoring system reads the output from the sensor and compares the total cycles or duration to the baseline lifespan of each coil design. When a predetermined threshold cycle count or duration period is met, the coil monitoring company as part of the overall monitoring system notifies the leasing company of an anticipated need to change a coil before failure. Once removed from the induction heating machine, the coil is preferably forwarded to the coil monitoring company for analysis and distribution to a coil manufacturing company for repair and reuse. Alternatively, the coil monitoring company may repair induction heating coils in-house. The leasing company is charged for each cycle or segment of time experienced by the induction heating coil and does not incur the cost of repair.

Additionally, in another embodiment, a system provides an efficient method for monitoring on-site induction heating coil inventory. An induction heating machine using multiple designed coils for hardening various workpieces during production may require the removal of one coil design and replacement with a second coil design. When production using the first coil design resumes, the counting system provides a method for reading the output transmitted from each coil remote counting sensor. This application is also advantageous when induction heating coils are used in series for continuous heat treating of billets prior to stamping and when induction heating coils are located within an enclosed environment not readily accessible for reading a counter within the area of the coil itself. In a preferred embodiment, the remote counting sensor may be a hand held reading device such as a bar code reader or personal computer used to read and analyze the tallied count or duration period for each inventoried coil.

Alternatively, or in conjunction with the remote counting sensor, an LED readout may be provided within the identifying tag counter mechanism and activated by the push of a button for viewing the number of cycles or duration period applicable to a particular coil. This educates the operator as to which coil best suits the needs of current production. The system also aids the operator in determining which coil should be used to replace the failed or failing coil in the examples set forth above. With this information the operator can predict and prepare for scheduled coil changeovers to eliminate production downtime.

When the failed coils are returned for repair, the coil monitoring company through the monitoring system, further provides a method for establishing industrial standards for induction heating coils. The coil monitoring company through the data culled from the monitoring system will maintain a database for recording the cycle lifespan or duration period of a certain coil design and the area of failure, for example. This information is accumulated and can aid in possibly improving the coil design by eliminating repetitive failure areas such as unnecessary or poorly brazed joints or use of inferior brazing material.

The coil monitoring company through monitoring system also provides a means for renovating the costs associated with current production processes. Instead of purchasing induction heating coils and contracting for repair, the monitoring system provides a method for leasing induction heating coils and paying on a per cycle basis. Alternatively, payment may be based on a time basis when the induction heating coil is measured for duration of energization. A fixed per cycle or time bases cost will encourage coil manufacturers to manufacture coils of the highest quality and maintain continuous improvement of production induction heating coils. This eliminates repair costs and provides a known fixed production price per part. By monitoring the lifespan of an induction heating coil, the system eliminates unknown costs, increases production, limits inventory, decreases potential waste costs and establishes industrial standards for the manufacturing and design of heating coils.

These and other objects of the present invention will become apparent upon reading the following detailed description in combination with the accompanying drawings, which depict systems and components that can be used alone or in combination with each other in accordance with the present invention.

### BRIEF DESCRIPTION OF THE DRAWINGS

FIG. 1 illustrates a first preferred embodiment of the apparatus and method for monitoring the amount of cycles or duration period experienced by an induction heating coil;

FIG. 2 illustrates a second preferred embodiment of the apparatus,and method for monitoring the amount of cycles or duration period experienced by an induction heating coil;

FIG. 3 illustrates a preferred embodiment of the counter with circuitry for measuring voltage change across the bus bar to trigger the counter;

FIG. 4 illustrates an induction heating coil counter block diagram of a preferred circuit for measuring the voltage change of FIG. 3;

FIG. 5 illustrates a third preferred: embodiment of the apparatus and method for monitoring the amount of cycles or duration period experienced by an induction heating coil;

FIG. 6 illustrates a fourth preferred embodiment of the apparatus and method for monitoring the amount of cycles or duration period experienced by an induction heating coil; and

FIG. 7 illustrates a fifth preferred embodiment of the apparatus and method for monitoring the amount of cycles or duration period experienced by an induction heating coil.

### DESCRIPTION OF THE PREFERRED EMBODIMENT

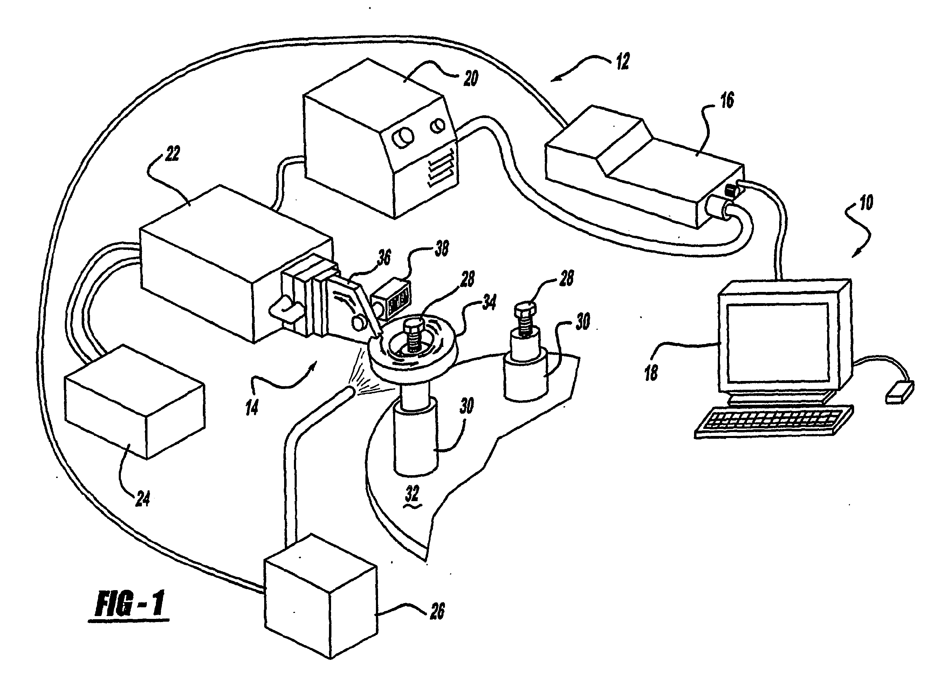

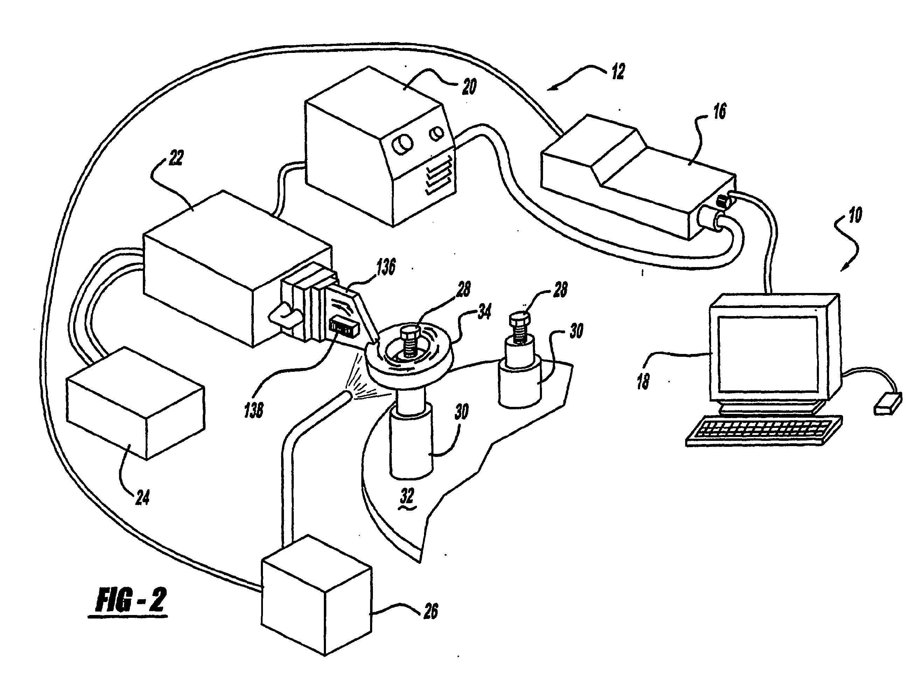

With reference to Figures 1 and 2, a monitoring system 10 of the present invention is there shown and includes an induction heating coil assembly 12 and subassembly 14. The components of the induction heating coil assembly 12 include a Program Learning Center (PLC) 16 connecting a hard-wired Personal Computer (PC) 18 with a power supply 20. ln an industrial setting, the PLC 16 is connected to a control cabinet (not shown) for automation and control of the induction process. The personal computer 18 is illustrated as part of the assembly 12; however, the personal computer 18 may be located off premises and connected to the monitoring system 10 via the Internet or other well-known communication devices.

A transformer 22 is connected to the power supply 20 and connects the induction heating coil subassembly 14 to the monitoring system 10. A cooling unit 24 for cooling the transformer 22 and coil subassembly 14 during the induction heating process is provided along with a quenching unit 26 for quenching a workpiece 28 after induction heating. The quenching unit 26 is preferably hard-wired to the PLC 16 for receiving information as to when to quench the workpiece 28. The workpiece 28 is shown resting on a tooling nest 30 located on a turntable 32.

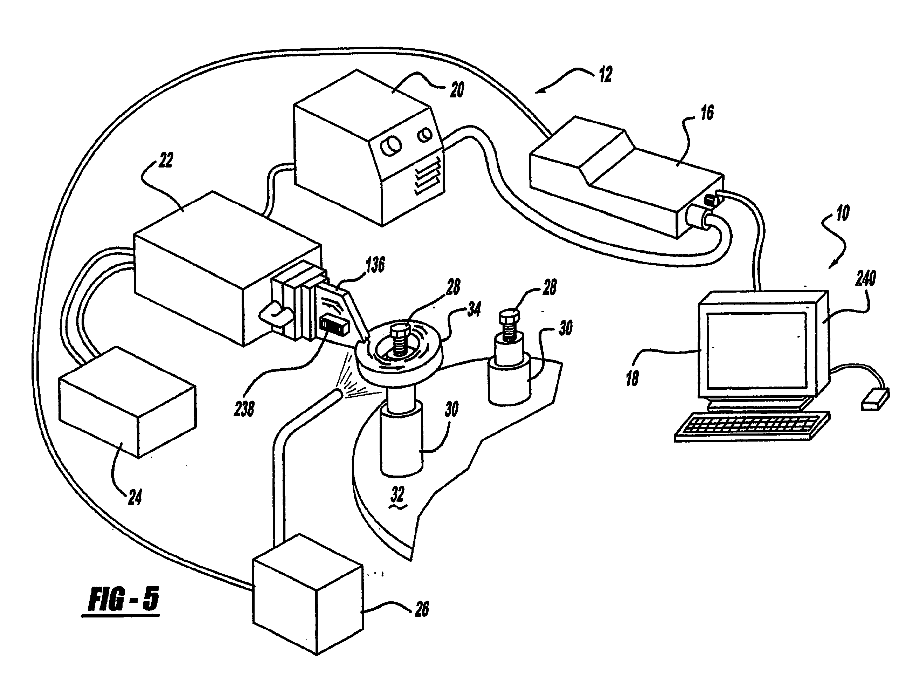

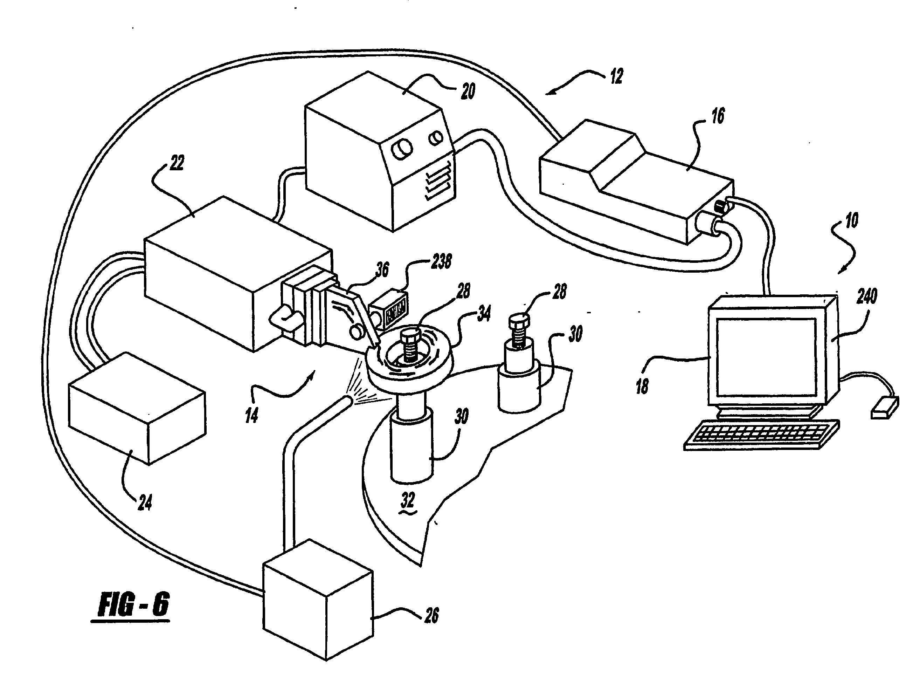

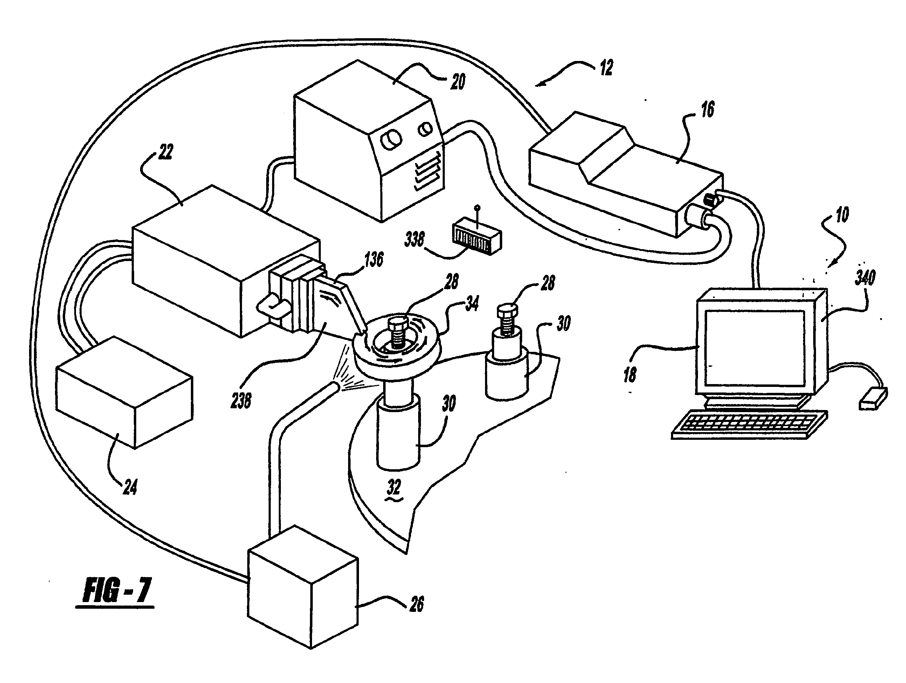

The induction heating coil subassembly includes an induction heating coil 34 surrounding the workpiece or billet 28 and a bus bar 36 : electrically connecting the induction heating coil 34 to the transformer 22 and power supply 20. A counting sensor 38 is shown removably attached to the bus bar 36 in Figure 1. Figure 2 illustrates a second preferred embodiment of the monitoring system 10 of the present invention with a counting sensor 138 embedded within a bus bar 136. figures 5 and 6 illustrate a third and fourth preferred embodiment of the monitoring system 10 of the present invention with a coil identifying tag 238 located in the area of the bus bar, either embedded (Fig. 5) or removably attached (Fig. 6). Figure 7 illustrates a coil identifying tag 338 located within the surrounding area of the induction coil subassembly 12 and capable of monitoring the change in voltage generated as the coil is energized or any other chosen measurement as set forth below. A sensor 240,340 is preferably provided remotely from the induction coil assembly and is triggered by a signal, such as a designated radio frequency, cellular number, bar code, or any other sensing means received by the induction coil identifying tag 238,338, respectively. When the machine is activated, the induction coil identifying tag responds to the voltage change across the bus bar and signals a single cycle to the remote sensor. Locating a transmitter, such as an identifying tag, within a limited area of the induction heating coil is advantageous where the coil is confined to a closed and monitored environment. Such an environment prevents a person from entering a restricted area to view the counting mechanism of the first preferred embodiment. Entering such an area during operation may trigger a stop mechanism and halt the induction heating operation altogether. As such, the remote counting sensor allows for reading pertinent information relating to the induction heating coil where direct access to the coil may not be possible or convenient.

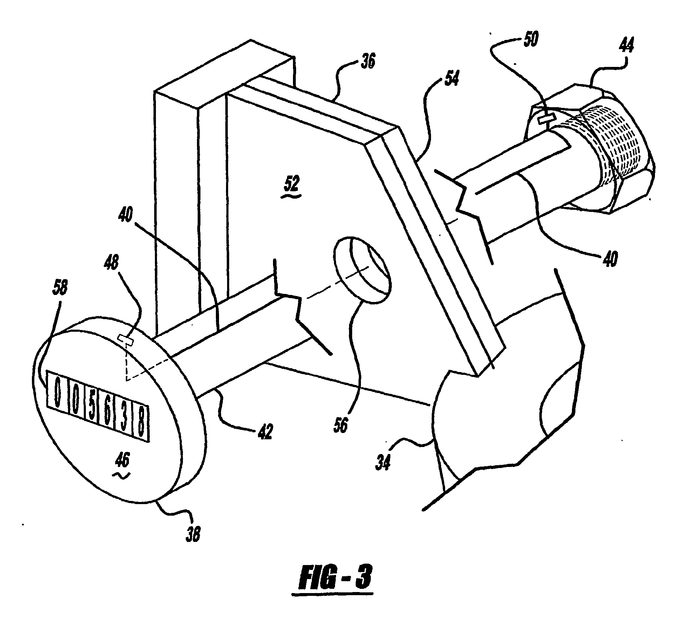

The sensor 38,138 may take one of several different forms. The sensor may include a counting mechanism within the body of the sensor, such as the nut and bolt combination illustrated in Figures 1 and 3, for after market attachment to an existing induction heating coil assembly or subassembly. The sensor, with counting mechanism, may also be embedded within the induction heating coil assembly or subassembly as illustrated in Figure 2. Alternatively, as illustrated in Figs. 5, 6 and 7, an identifying tag 238, 338, such as a resistor pattern or transmitter, signals to an external source, or remote sensor 240, 340 located within a control cabinet, personal computer, bar code identifier, PDA, or cellular telephone for example, the identity of a particular coil and instructs the computer to begin a consecutive cycle count or duration period. As with all forms of sensors, the cycle count or duration period along with other pertinent data is input, stored and retrieved for analysis on or off premise.

As is well known in the art, the induction :heating process relies on electrical currents within a material to produce heat. The power supply 20 sends alternating current through the induction heating coil 34, generating a magnetic field. A workpiece or billet 28 is placed in the coil 34 and enters the magnetic field. Alternating current through the coil 34 during the heating cycle causes current flow within the workpiece or billet 28, generating precise amounts of localized heat without physical contact between the coil 24 and the workpiece or billet 28.

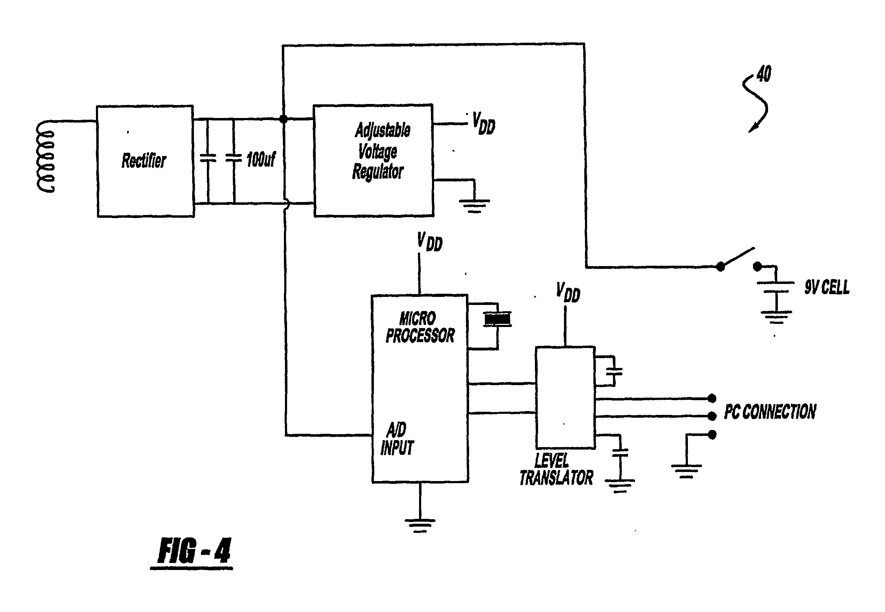

Figures 3 and 4 illustrate a preferred embodiment of the counting or duration period sensor 38 and circuitry 40 for measuring the change in voltage across the bus bar 36 and triggering the counting or duration period sensor 38 when the-induction heating coil 34 is cycled. The counting or duration period sensor 38 includes a bolt 42 and nut 44 that serves the dual purpose of housing the circuitry 40 and securing the bus bar 36 within the induction heating coil subassembly 14. The bolt 42 and nut 44 are preferably formed of a non-conductive or minimally conductive material such as plastic, ceramic, brass or stainless steel as is well known in the industry, thus preventing overheating during the heating cycle. The nut and bolt combination provide an after market counting or duration period sensor that can easily replace an existing nut and bolt in induction heating coil assemblies already in production.

The head 46 of the bolt 42 is provided with a contact point 48 along the interior of the head 46. A second contact point 50 is located within the interior of the nut 44. Both contact points 48, 50 are preferably formed of a conductive material such as copper and will contact the bus bar 36 on opposing sides 52,54, respectively, when the bolt 42 is placed In hole 56 in bus bar 36 and tightly secured by the nut 44. These contact points, 48,50 may be' located anywhere along the interior of the head 46 and nut 44 as long as contact is maintained with the bus bar-36 when the bolt 42 is secured. The contact points 48, 50 read the difference of electrical potential, or change in voltage, across the bus bar 36 when the induction heating coil 34 is cycled, In turn, dosing the circuit loop 40 within the bolt 42, triggering the counting sensor 38 to record a consecutive cycle count on a visual display 58. A typical circuit loop 40 is illustrated with a 9-volt cell that connects to a light to illuminate the light when a cycle is visually displayed.

Figures 5 through 7 illustrate a second preferred embodiment locating a counting sensor remotely from the induction heating coil. Preferably, a remote sensor 240,340 is provided with the counter and circuitry illustrated in Figures 3 and 4 and measures the induction heating coil cycles and/or duration of energization when the corresponding identifying tag 238, 338 transmits a signal to the remote sensor 240, 340 in response to the change in voltage experienced across the bus bar as described above.

Numerous alternative embodiments of the counting or duration period sensor, means for measuring a cycle or duration period, means for reading the cycle count or duration period, and means for monitoring, recording, displaying and disseminating the cycle count or duration period for each induction heating coil are envisioned and include a counting or duration period sensor embedded within the nut and bolt as illustrated in Figure 2. Alternative means for measuring a cycle or duration period include but are not limited to, measuring the change in current, frequency or temperature about the induction heating coil assembly or using a Hall effect device as described in U.S. Patent No. 3,388,318. In general, the cycle or duration period is measured by any means known in the art upon the generation of a magnetic field about an induction heating coil.

The consecutive cycle count or duration period may be recorded for reading visually as illustrated in Figure 3 or using a bar code reader 38, 138 as shown in Figures 1 and 2, respectively. Other recording and transmission devices may be used including a sensor in conjunction with a computer 18, as shown in Figure 1, that may be wireless or hard wired to the monitoring system 10 or any hand held device, commonly referred to as PDA's, for receiving transmitted information via radio or telephone transmissions (land line or cellular.) Figures 5 and 6 illustrate the use of a remote sensor used in conjunction with an induction coil identifying tag.

Initially, the monitoring system 10 of the present invention provides a method for establishing a baseline lifespan of an induction heating coil, both per cycle and energization during period. An induction heating coil is provided with an identifying tag and remote sensor, or counting or duration period mechanism as described above, for use with an induction heating coil assembly in a production setting. The identifying tag may be provided as an aftermarket nut and bolt arrangement, may be embedded within the induction heating coil or bus bar when either is manufactured or simply,located within the induction heat coil assembly area. The remote counting or duration period mechanism is triggered by a signal emitted from the identifying tag each time a magnetic field is generated about the coil (illustrated by arrows showing the flowing electricity through the induction heating coil in Figures 1 and 2, and 5-7), i.e. when the induction heating coil is cycled. When measuring the duration of energization the induction heating coil cycle extends from the triggered moment until shutdown of the coil. In this instance, the sensor measures the time period the coil is energized and considers this as a single cycle. The counting or duration period sensor measures the change in voltage across the bus bar and consecutively counts or triggers to count a cycle or measure a duration period each time the magnetic field is generated. The induction heating coil is maintained in production and each cycle is counted or duration period measured and recorded by the counting or duration period sensor until the coil fails. The final cycle count or duration period is recorded by the counting or duration period sensor or by other means such as a personal computer receiving the output from the counting or duration period sensor. This final cycle count or duration period measured is recorded and maintained by the monitoring system to aid in establishing an average baseline lifespan of similarly shaped induction heating coils and subassemblies.

Once an average baseline lifespan is established, the monitoring system of the present invention provides a method for monitoring the amount of cycles or duration period attributable to an induction heat coil in production. This method includes providing an induction heating coil assembly with an induction heating coil having a counting or duration period sensor or identifying tag with remote sensor. The counting or duration period sensor is triggered or the identifying tag triggers an external receiver, such as a remote sensor, with each cycle or duration period of the coil when a magnetic field is generated during the induction process. The counting or duration period sensor, the identifying tag, or the remote sensor may be read manually or the sensor may receive the counting data or measure of the duration period and transmit the output to a monitoring system having a computer or any type of PDA for receiving the output data ,The consecutive count for each induction heating coil is maintained and monitored by the system. The monitoring system may provide a direct means for reading the count or duration period, such as a visual system, or may send out a notification via any means such as e-mail, cellular telephone, cellular PDA, cellular or hard-wired computer system, for example, to notify the production assembly of the consecutive cycles or duration period sustained by each coil. This cycle count or duration period may be compared to the established baseline lifespan of a coil and such information may be used to recommend replacing a coil prior to failure if the cycle count or duration period is within a pre-determined range of the average.

Preferably, the monitoring system of the present invention is maintained and controlled by a coil monitoring company. The company provides the induction heating coils with sensors and identifying tags for lease, rather than purchase, by a company for use during production. As the sensor tallies cycles or duration period for each coil, the monitoring system reads the output from the sensor and compares the total cycles or measured duration period to the baseline lifespan of each coil design. When a predetermined threshold cycle count or duration period is met, the monitoring system notifies the leasing company of an anticipated need to change a coil before failure. Once removed from the induction heating machine, the coil is preferably forwarded to the coil monitoring company for analysis and distribution to a coil manufacturer for repair and reuse. Alternatively, the coil monitoring company may repair induction heating coils in-house. The leasing company is charged for each cycle experienced by the induction heating coil or a measurement of time interval, such as per minute, for the measured duration period and does not incur the cost of repair.

Additionally, the coil monitoring company provides the monitoring system of the present invention for aiding the leasing company in monitoring on-site induction heating coil inventory. An induction heating machine using multiple designed coils for component hardening various workpieces or a series of coils for continuous heating of billets prior to stamping may require the removal of one coil design during production and replacement wit a second coil design. When production using the first coil design resumes, the counting or duration period system provides a method for reading the output from each coil sensor or the identifying tag. In a preferred embodiment, a hand held reading device such as a bar code reader or personal computer is used to read and analyze the tallied count or duration period for each inventoried coil. Alternatively, an LED readout may be provided within the counter mechanism or the identifying tag and activated by the push of a button for viewing the number of cycles or duration period applicable to a particular coil. This educates the operator as to which coil best suits the needs of current production. The system also aids the operator in determining which coil should be used to replace the failed or failing coil in the example set forth above. With this information the operator can predict and prepare for scheduled coil changeovers to eliminate production downtime.

When the failed coils are returned for repair, the monitoring system further provides a method for establishing industrial standards for induction heating coils. The monitoring system includes maintaining a database for recording the cycle lifespan or duration period of a certain coil design and the area of failure, for example. This information is accumulated and can aid in possibly improving the coil design by eliminating repetitive failure areas such as unnecessary or poorly brazed joints or use of inferior brazing material.

The monitoring system also provides a means for renovating the costs associated with current production processes. Instead of purchasing induction heating coils and contracting for repair, the monitoring system provides a method for leasing induction heating coils and paying on a per cycle or time interval basis. A fixed per cycle or time interval cost will encourage coil manufacturers to manufacture coils of the highest quality and maintain continuous improvement of production induction heating coils. This eliminates repair costs and provides a known fixed production price per part. By monitoring the lifespan of an induction heating coil, the system eliminates unknown costs, increases production, limits inventory, decreases potential waste costs and establishes industrial standards for the manufacturing and design of heating coils.

Although the invention has been described with particular reference to certain preferred embodiments thereof, variations and modifications can be effected within the scope of the following claims.

## Claims

1. A method of monitoring the duration of energization attributable to an induction heating coil comprising the steps of:
providing an induction heating coil with an identifying tag and remote counting sensor for monitoring the duration of energization of the induction heating coil;
generating a magnetic field about said induction heating coil; and
triggering said remote counting sensor to increase the count in response to said magnetic field and begin measuring the time interval of said duration of energization.

2. The method of claim 1, wherein said remote counting sensor comprises a sensor for receiving and outputting counting data, said data including the measurement of a time interval for the measured duration of energization period of said induction heating coil.

3. The method of claim 2, and further comprising the step of:
said remote counting sensor monitoring the duration of energization of the induction heating coil each time said identifying tag is triggered.

4. The method of claim 1, wherein said identifying tag is an identifier of said induction heating coil, and further comprising the step of: said identifier emitting a signal for triggering said remote counting sensor to monitor the duration of energization of the induction heating coil each time said induction heating coil is cycled.

5. The method of claim 1 of monitoring the duration of energization per cycle attributable to an induction heating coil of an induction heating coil assembly, said assembly comprising a power supply and an induction heating coil subassembly including said induction heating coil and a bus bar connecting said coil to said power supply, the method further comprising the steps of:
providing an induction heating coil subassembly wherein said remote counting sensor comprises a sensor for receiving and outputting counting data;
said identifying tag emitting a signal for triggering said remote counting sensor to monitor the duration of energization of the induction heating coil each time said induction heating coil is cycled, wherein said remote counting sensor monitors the duration of energization of the induction heating coil each time said induction heating coil is cycled when said magnetic field is generated about said coil;
maintaining said coil within said induction heating coil subassembly and continuing to monitor the duration of energization of the induction heating coil each time said induction heating coil is consecutively cycled until said coil fails;
reading said output data of said remote counting sensor; wherein said output data includes the measurement of a time interval for the measured duration of energization period sustained by said coil; and
establishing a baseline lifespan for said coil based on said output data.

6. The method of claim 5, and further comprising the steps of:
providing a series of like induction heating coil subassemblies each with said identifying tag and remote counting sensor;
generating a magnetic field about each coil of said induction heating coil subassemblies;
triggering each of said remote counting sensors when said magnetic field is generated, said identifying tag emitting a signal for triggering said remote counting sensor;
maintaining each of said coils within said induction heating coil subassemblies and continuing to monitor the duration of energization of each of said induction heating coils each time said induction heating coil is consecutively cycled until each of said coil fails;
reading said output data of each said remote counting sensors; wherein said output data includes the measurement of a time interval for the measured duration of energization period sustained by said coils; and
establishing an average baseline lifespan for said like coils based on said output data.

7. The method of claim 6, and further comprising the steps of:
once said average baseline lifespan is established for said like coils, replacing at least one of said coils with a new like coil upon said failure, wherein said new coil comprises an identifying tag and remote counting sensor for receiving and outputting counting data;
monitoring said duration of energization for each time said induction heating coil is consecutively cycled and sustained by said replaced coil by reading said output data; and
recommending replacing said replaced coil prior to failure of said coil if said measurement of a time interval for the measured duration of energization period is within a pre-determined range of said average baseline lifespan for said like coils.

8. A method of monitoring the duration of energization per cycle attributable to an induction heating coil of an induction heating coil assembly comprising a power supply and an induction heating coil subassembly comprising said induction heating coil and a bus bar connecting said induction heating coil to said power supply, wherein an average baseline lifespan for said induction heating coil has been established according to claims 6 or 7, the method comprising the steps of:
providing said induction heating coil subassembly with an identifying tag and remote counting sensor; wherein said identifying tag is an identifier of said induction heating coil and wherein said remote counting sensor comprises a sensor for receiving and outputting counting data;
generating a magnetic field about said coil;
triggering said remote counting sensor when said magnetic field is generated; said identifying tag emitting a signal for triggering said remote counting sensor, wherein said remote counting sensor monitors the duration of energization of the induction heating coil each time said induction heating coil is cycled when said magnetic field is generated about said coil;
reading said output data of said remote counting sensor; wherein said output data includes the measurement of a time interval for the measured duration of energization period sustained by said coil;
monitoring said duration of energization for each time said induction heating coil is consecutively cycled and sustained by said replaced coil by reading said output data; and
recommending replacing said replaced coil prior to failure of said coil if said measurement of a time interval for the measured duration of energization period is within a pre-determined range of said average baseline lifespan for said like coils.

9. A method for monitoring the amount of cycles attributable to an induction coil comprising the steps of:
providing an induction coil with an identifying tag and remote counting sensor;
generating a magnetic field about said induction coil; and
triggering said remote counting sensor when said magnetic field is generated.

10. The method of claim 9, wherein said remote counting sensor comprises a sensor for receiving and outputting counting data.

11. The method of claim 10, and further comprising the step of:
said remote counting sensor consecutively counting each time said sensor is triggered.

12. The method of claim 9, wherein said identifying tag is an identifier of said induction heating coil, and further comprising the step of: said identifier emitting a signal for triggering said remote counting sensor each time said induction coil is cycled.

13. The method of claim 9 for monitoring the amount of cycles attributable to an induction coil of an induction coil assembly, said assembly comprising a power supply and an induction coil subassembly including said induction coil and a bus bar connecting said coil to said power supply, the method further comprising the steps of:
providing an induction heating coil subassembly wherein said remote counting sensor comprises a sensor for receiving and outputting counting data;
said identifying tag emitting a signal for triggering said remote counting sensor consecutively counts a cycle each time said magnetic field is generated about said coil;
maintaining said coil within said induction coil subassembly and continuing to consecutively count said cycles until said coil fails;
reading said output data of said remote counting sensor; wherein said output data includes the total amount of consecutive cycles sustained by said coil; and
establishing a baseline lifespan for said coil based on said output data.

14. The method of claim 13, and further comprising the steps of:
providing a series of like induction coil subassemblies each with said remote counting sensor;
generating a magnetic field about each coil of said induction coil subassemblies;
triggering each of said remote counting sensors when said magnetic field is generated;
maintaining each of said coils within said induction coil subassemblies and continuing to consecutively count said cycles until each of said coil fails;
reading said output data of each said remote counting sensors; wherein said output data includes the total amount of consecutive cycles sustained by each of said coils; and
establishing an average baseline lifespan for said like coils based on said output data.

15. The method of claim 14, and further comprising the steps of:
once said average baseline lifespan is established for said like coils, replacing at least one of said coils with a new like coil upon said failure, wherein said new coil comprises an identifying tag and remote counting sensor for receiving and outputting counting data;
monitoring said consecutive cycles sustained by said replaced coil by reading said output data; and
recommending replacing said replaced coil prior to failure of said coil if said cycles are within a pre-determined range of said average baseline lifespan for said like coils.

16. A method for monitoring the amount of cycles attributable to an induction coil of an induction coil assembly comprising a power supply and an induction coil of an induction coil assembly comprising a power supply and an induction coil subassembly comprising said induction coil and a bus bar connecting said induction coil to said power supply, wherein an average baseline lifespan for said induction coil has been established according to claims 14 or 15, the method comprising the steps of:
providing an induction coil subassembly with an identifying tag and remote counting sensor; wherein said counting mechanism comprises a sensor for receiving and outputting counting data;
generating a magnetic field about said coil;
triggering said remote counting sensor when said magnetic field, is generated; wherein said remote counting sensor consecutively counts a cycle each time said magnetic field is generated about said coil;
reading said output data of said remote counting sensor; wherein said output data includes the total amount of consecutive cycles sustained by said coil;
monitoring said consecutive cycles sustained by said coil by reading said output data; and
recommending replacing said coil prior to failure of said coil if said cycles are within a pre-determined range of said average baseline lifespan for said like coils.

17. The method of claim 7 or 16, further comprising the step of:
replacing said replaced coil with a new coil having an identifying tag and remote counting sensor for receiving and outputting counting data.

18. The method of claim 8 or 16, wherein said remote counting sensor is triggered by a change in voltage across said induction coil subassembly when said power supply is activated; or
wherein said remote counting sensor is triggered by any one of the following events when said magnetic field is generated about said induction coil: a temperature differential, a current flow differential, a frequency differential, or a magnetic field differential causing a Hall effect.

19. The method of claim 8 or 16, further comprising the step of:
replacing said replaced coil with a new coil having a remote counting sensor including a sensor for receiving and outputting counting data.

20. The method of any one of claims 2 to 4 or 10 to 12, and further comprising the step of:
reading said counting data from said remote counting sensor.

21. The method of claim 5 or 13, wherein said identifying tag is removably attached to said induction coil, further comprising the step of:
replacing said replaced coil with a new coil having an identifying tag and remote counting sensor including a sensor for receiving and outputting counting data.

22. The method of claim 2, 5, 8, 10, 13 or 16, wherein said identifying tag is removably attached to said induction coil; or
wherein said identifying tag is embedded within said induction coil; or
wherein said identifying tag is located within a triggerable area of the induction coil.

## Patentansprüche

1. Methode zur Überwachung der Dauer der Erregung einer Induktionsheizspule, bestehend aus den Schritten:
Bereitstellung einer Induktionsheizspule mit einem Identifikationsmerker und einem Fernzähler zur Überwachung der Dauer der Erregung der Induktionsheizspule;
Generierung eines Magnetfeldes um die besagten Induktionsheizspule herum; und
Auslösung des besagten Fernzählsensors zur Erhöhung des Zählwerts als Reaktion auf das besagte Magnetfeld und Beginn der Messung der Zeitdauer der besagten Dauer der Erregung.

2. Methode gemäß Anspruch 1, wobei der besagte Fernzähler einen Sensor für den Empfang und die Ausgabe von Zähldaten aufweist, die den Messwert eines Zeitintervalls für die gemessene Zeitdauer der Erregung der besagten Induktionsheizspule einbeziehen.

3. Methode gemäß Anspruch 2, mit dem weiteren Schritt:
Überwachung der Dauer der Erregung der Induktionsheizspule bei jeder Auslösung des besagten Identifikationsmerkers durch den Fernzählsensor.

4. Methode gemäß Anspruch 1, bei dem es sich bei dem Identifikationsmerker um einen Identifikationsmerker der besagten Induktionsheizspule handelt, mit dem weiteren Schritt:
Sendung durch den besagten Identifikationsmerker eines Signals zur Auslösung des besagten Femzählers zur Überwachung der Dauer der Erregung der Induktionsheizspule bei jedem Zyklus der besagten Induktionsheizspule.

5. Methode gemäß Anspruch 1 zur Überwachung der Dauer der Erregung bei jedem Erregungszyklus einer Induktionsheizspule eines Induktionsheizspulenzusammenbaus, wobei der besagte Zusammenbau ein Netzteil und ein Induktionsheizspulen-Bauteil einschließlich der besagten Induktionsheizspule und einer Stromschiene aufweist, die die besagte Spule mit dem besagten Netzteil verbindet und mit dem weiteren Schritt:
Bereitstellung eines Induktionsheizspulen-Bauteils, bei dem der besagte Fernzählsensor einen Sensor für den Empfang und die Ausgabe von Zähldaten aufweist;
Sendung durch den besagten Identifikationsmerker eines Signals zur Auslösung des besagten Fernzählsensors zur Überwachung der Dauer der Erregung der Induktionsheizspule bei jedem Zyklus der Induktionsheizspule, wobei der besagte Sensor für die Fernzählung die Dauer der Erregung der Induktionsheizspule bei jedem Zyklus der besagten Induktionsheizspule überwacht, wenn das besagte Magnetfeld um die besagte Spule herum generiert wird;
Einbeziehung der besagten Spule in das besagte Induktionsheizspulen- Bauteil und fortlaufende Überwachung der Dauer der Erregung der Induktionsheizspule jedes Mal, wenn die besagte Induktionsheizspule danach einen neuen Erregungszklus durchläuft, bis die besagte Spule versagt;
Lesen der besagten Ausgabedaten des besagten Fernzählsensors, wobei die besagten Ausgabedaten die Messung eines Zeitintervalls für die gemessene Dauer des Zeitraums der Erregung der besagten Spule einbezieht; und
Ermittlung einer Grundkennlinie für die Standzeit der besagten Spule auf der Basis der Ausgabedaten.

6. Methode gemäß Anspruch 5, mit folgenden weiteren Schritten:
Bereitstellung einer Reihe von einander gleichartigartigen Induktionsheizspulen-Bauteilen, jedes mit besagtem Identifikationsmerker und Fernzählsensor;
Generierung eines Magnetfelds um jede Spule der besagten Induktionsheizspulen-Bauteile herum;
Auslösung jedes der besagten Fernzählsensoren bei der Generierung des besagten Magnetfeldes, wobei der besagte Merker ein Signal zur Auslösung des besagten Fernzählsensors sendet;
Einbeziehung jeder der besagten Spulen in die besagten Induktionsheizspulen-Bauteile und fortlaufende Überwachung der Dauer der Erregung jeder der besagten Induktionsheizspulen jedes Mal, wenn sie einen besagten Heizspulen Erregungszeitraum durchlaufen, bis jede der besagten Spulen versagt;
Lesen der besagten Ausgabedaten der besagten Femzählsensoren, wobei die besagten Ausgabedaten die Messung eines Zeitintervalls für die gemessene Dauer des Zeitraums der Erregung der besagten Spulen einbezieht; und
Ermittlung einer mittleren Grundkennlinie für die Standzeit der besagten Spulen auf der Basis der Ausgabendaten.

7. Methode gemäß Anspruch 6, mit nachfolgenden weiteren Schritten:
Nach Ermittlung der mittleren Grundkennlinie für die Standzeit solcher gleichartigen Spulen, Ersatz wenigstens einer der besagten Spulen mit einer gleichartigen, neuen Spule im Falle des besagten Ausfalls, wobei die besagte neue Spule einen Identifikationsmerker und einen Fernzählsensor für den Empfang und die Ausgabe von Zähldaten aufweist;
Überwachung der besagten Dauer der Erregung durch Lesen der besagten Ausgabedaten jedes Mal, wenn die besagte Induktionsheizspule einander folgende Zyklen mit der besagten ersetzten Spule durchläuft; und
Empfehlung zum Ersatz der besagten ersetzten Spule vor dem Versagen der besagten Spule, wenn die besagte Messung des Zeitintervalls für die gemessene Dauer der Erregung innerhalb eines vorgegebenen Bereichs der besagten mittleren Grundkennlinie für die besagten gleichartigen Spulen liegt.

8. Methode zur Überwachung der Dauer der Erregung jedes Zyklus, der einer Induktionsheizspule für einen Induktionsheizspulen-Zusammenbau zuzuordnen ist, die ein Netzteil und ein Induktionsheizspulen-Bauteil mit der besagten Induktionsheizspule und einer Stromschiene zur Verbindung der besagten Induktionsheizspule mit dem besagten Netzteil aufweist, wobei eine mittlere Standzeit-Grundkennlinie für die besagte Induktionsspule gemäß Anspruch 6 oder 7 ermittelt worden ist, und die Methode folgende Schritte umfasst:
Ausführung des besagten Induktionsheizspulen-Bauteils mit einem Identifikationsmerker und einem Fernzählsensor, wobei der besagte Merker ein Merker zur Identifikation der besagten Induktionsheizspule ist und der Fernzählsensor einen Sensor zum Empfang und zur Ausgabe von Zähldaten aufweist;
Generierung eines Magnetfelds um die besagte Spule herum;
Auslösung des besagten Fernzählsensors bei Generierung des besagten Magnetfelds, wobei der besagte Merker zur Identifikation ein Signal zur Auslösung des besagten Fernzählers überträgt, während der besagte Fernzählsensor die Dauer der Erregung der Induktionsheizspule bei jedem Zyklus der besagten Induktionsheizspule überwacht, wenn das besagte Magnetfeld um die besagte Spule herum generiert wird;
Lesen der besagten Ausgabedaten des besagten Fernzählsensors, wobei die besagten Ausgabedaten die Messung eines Zeitintervalls für die gemessene Dauer des durch die Spule aufrechterhaltenen Zeitraums der Erregung einbezieht;
Überwachung der besagten Dauer der Zeiten jedes der aufeinanderfolgenden, von der ersetzten Spule ausgeführten Erregungs- und Haltezyklen durch Lesen der besagten Ausgabedaten; und
Empfehlung zum Ersatz der besagten ersetzten Spule vor dem Versagen der besagten Spule, wenn die besagte Messung eines Zeitintervalls für die gemessen Dauer der Erregung innerhalb eines vorgegebenen Bereichs der besagten mittleren Grundkennlinie für die besagten gleichartigen Spulen liegt.

9. Methode zur Überwachung der Anzahl einer Induktionsspule zuzuordnenden Zyklen mit folgenden Schritten:
Bereitstellung einer Induktionsspule mit einem Identifikationsmerker und einem Fernzählsensor;
Generierung eines Magnetfelds um die besagte Induktionsspule herum; und
Auslösung des besagten Sensors bei der Generierung des besagten Magnetfeldes.

10. Methode gemäß Anspruch 9, bei dem der besagte Zählsensor einen Sensor für den Empfang und die Ausgabe von Zähldaten aufweist.

11. Methode gemäß Anspruch 10, mit dem weiteren Schritt:
Aufeinanderfolgendes Zählen jeder Auslösung des besagten Sensors durch den Fernzählsensor.

12. Methode gemäß Anspruch 9, bei der der besagte Identifikationsmerker ein Merker zur Identifikation der besagten Induktionsspule ist und mit dem weiteren Schritt:
Sendung eines Signals durch den besagten Identifikationsmerker zur Auslösung des besagten Fernzählsensors bei jedem Zyklus der besagten Induktionsspule.

13. Methode gemäß Anspruch 9 zur Überwachung der einer Induktionsspule in einem Induktionspulenzusammenbau zuzuordnenden Anzahl Zyklen, wobei der besagte Zusammenbau ein Netzteil und ein Induktionsspulen-Bauteil einschließlich der besagten Induktionsspule und eine Stromschiene zur Verbindung der besagten Spule mit besagtem Netzteil aufweist und die Methode folgende weitere Schritte aufweist:
Ausführung eines Induktionsheizspulen-Bauteils, in dem der besagte Fernzählsensor einen Sensor für den Empfang und die Ausgabe von Zähldaten aufweist;
Sendung durch den Identifikationsmerker eines Signals zur Auslösung der Zählung durch den Fernzählsensor von aufeinanderfolgenden Zählwerten für jeden Zyklus, bei dem das besagte Magnetfeld um die besagte Spule herum generiert wird;
Einbeziehung der besagte Spule in das besagte Induktionsspulen-Bauteil und fortlaufende Zählung der besagten Zyklen, bis die besagte Spule versagt;
Lesen der besagten Ausgabedaten des besagten Fernzählsensors, wobei die besagten Ausgabedaten die Gesamtzahl der aufeinanderfolgenden, von der besagten Spule durchlaufenen Zyklen einbeziehen; und
Ermittlung einer Standzeit-Grundlinie für die besagte Spule an Hand der besagten Ausgabedaten.

14. Methode gemäß Anspruch 13, mit den nachfolgenden weiteren Schritten:
Bereitstellung einer Reihe von gleichartigen Induktionsspulen-Bauteilen jeweils mit dem besagten Fernzählsensor;
Generierung eines Magnetfeldes um jede Spule der besagten Induktionsspulen-Bauteile herum;
Auslösung jedes der besagten Fernzählsensoren bei der Generierung des besagten Magnetfeldes;
Einbeziehung jeder der besagten Spulen in besagte Induktionsspulen-Bauteile und Fortsetzung der fortlaufenden Zählung der besagten Zyklen bis zum Versagen jeder der besagten Spulen;
Lesen der besagten Ausgabedaten für jeden Fernzählsensor, wobei die besagten Ausgabedaten die Gesamtzahl der aufeinanderfolgenden Zyklen einbezieht, die jede der besagten Spulen durchlaufen hat; und
Ermittlung einer mittleren Standzeit-Grundlinie für die besagten gleichartigen Spulen an Hand der besagten Ausgabedaten.

15. Methode gemäß Anspruch 14, mit den nachfolgenden weiteren Schritten:
Nach der Ermittlung der besagten mittleren Standzeit-Grundlinie für besagte gleichartige Spulen, Ersatz wenigstens einer der besagten Spulen mit einer gleichartigen, neuen Spule im Falle des besagten Ausfalls, wobei die besagte neue Spule einen Identifikationsmerker und einen Fernzählsensor für den Empfang und die Ausgabe von Zähldaten aufweist;
Überwachung der besagten aufeinanderfolgenden, von der besagten ersetzten Spule durchlaufenen Zyklen durch Lesen der besagten Ausgabedaten; und
Empfehlung des Ersatzes der besagten ersetzten Spule vor dem Versagen der besagten Spule, falls die besagten Zyklen innerhalb eines vorbestimmten Bereichs der besagten mittleren Standzeit-Grundkennlinie für die besagten, gleichartigen Spulen liegen.

16. Methode zur Überwachung der Anzahl Zyklen, die einer Induktionsspule eines Induktionsspulen-Zusammenbaus , bestehend aus einem Netzteil und der Induktionsspule eines Induktionsspulenzusammenbaus mit einem Netzteil und einem Induktionsspulen-Bauteil mit besagter Induktionsspule und einer Stromschiene zur Verbindung der besagten Induktionsspule mit dem besagten Netzteil zuzuordnen sind, wobei die mittlere Standard- Grundkennlinie der besagten Induktionsspule nach Anspruch 14 oder 15 ermittelt wurde und die Methode folgende Schritte umfasst:
Bereitstellung eines Induktionsheizspulen-Bauteils mit einem Identifikationsmerker und einem Fernzählsensor, bei der der besagte Zählmechanismus einen Sensor für den Empfang und die Ausgabe von Zähldaten aufweist;
Generierung eines Magnetfelds um die besagte Spule herum;
Auslösung des besagten Fernzählsensors bei der Generierung des besagten Magnetfelds, wobei der besagte Fernzählsensor aufeinanderfolgende Zyklen jeweils dann zählt, wenn das besagte Magnetfeld um die besagte Spule herum generiert wird;
Lesen der besagten Ausgabedaten des besagten Fernzählsensors, wobei die besagten Ausgabedaten die Gesamtzahl der von der besagten Spule durchlaufenen, aufeinanderfolgenden Zyklen mit einbezieht;
Überwachung der von der besagten Spule durchlaufenen aufeinanderfolgenden Zyklen durch Lesen der besagten Ausgabedaten; und
Empfehlung des Ersatzes der besagten Spule vor dem Versagen der besagten Spule, wenn die Anzahl der besagten Zyklen in einem vorbestimmten Bereich der besagten mittleren Standzeit-Grundlinie für besagte gleichartigartige Spulen liegt.

17. Methode gemäß Anspruch 7 oder 16, mit den nachfolgenden weiteren Schritten:
Ersatz der besagten, ersetzten Spule mit einer neuen Spule mit einem Identifikationsmerker und einem Fernzählsensor für den Empfang und die Ausgabe von Zähldaten.

18. Methode gemäß Anspruch 8 oder 16, bei der die Auslösung des Fernzählsensors durch Änderung einer an den besagten Induktionsspulenzusammenbau angelegten Spannung erfolgt, wenn das besagte Netzteil aktiviert wird; oder
bei der die Auslösung des besagten Fernzählsensors von einem der nachfolgenden Ereignisse ausgelöst wird, wenn das besagte Magnetfeld um die besagte Induktionsspule herum generiert wird, wobei eine Temperaturdifferenz, eine Strömungsdifferenz, eine Frequenzdifferenz oder eine Magnetfelddifferenz einen Hall-Effekt verursachen können.

19. Methode gemäß Anspruch 8 oder Anspruch 16, mit den nachfolgenden weiteren Schritten:
Ersatz der besagten ersetzten Spule mit einer neuen Spule mit einem Fernzählsensor einschließlich eines Sensors für den Empfang und die Ausgabe von Zähldaten.

20. Methode gemäß einem der Ansprüche 2 bis 4 oder 10 bis 12 und mit den nachfolgenden weiteren Schritten:
Lesen der besagten Zähldaten aus dem Fernzählsensor.

21. Methode gemäß Anspruch 5 oder 13, wobei der besagte Identifikationsmerker abnehmbar an der besagten Induktionsspule angebracht ist, mit folgendem weiteren Schritt:
Ersatz der ersetzten Spule mit einer neuen Spule mit einem Identifikationsmerker und einem Fernzählsensor einschließlich eines Sensors für den Empfang und die Ausgabe von Zähldaten.

22. Methode gemäß Anspruch 2, 5, 8, 10, 13 oder 16, bei der der besagte Identifikationsmerker abnehmbar an der besagten Induktionsspule angebracht ist; oder
bei der der besagte Identifikationsmerker in die besagte Induktionsspule eingebettet ist; oder
bei dem sich der besagte Identifikationsmerker im Auslösebereich der Induktionsspule befindet.

## Revendications

1. Procédé permettant de contrôler la durée d'excitation attribuable à une bobine de chauffage par induction comportant les étapes consistant à :
mettre une bobine de chauffage par induction en oeuvre avec une étiquette d'identification et un capteur de comptage à distance pour contrôler la durée d'excitation de la bobine de chauffage par induction ;
générer un champ magnétique au niveau de ladite bobine de chauffage par induction ; et
déclencher ledit capteur de comptage à distance pour augmenter le comptage en réaction audit champ magnétique et pour commencer à mesurer l'intervalle de temps de ladite durée d'excitation.

2. Procédé selon la revendication 1, dans lequel ledit capteur de comptage à distance comporte un capteur destiné à recevoir et à sortir des données de comptage, lesdites données comprenant la mesure d'un intervalle de temps pour la durée mesurée de la période d'excitation de ladite bobine de chauffage par induction.

3. Procédé selon la revendication 2, et comportant par ailleurs l'étape consistant à :
contrôler par le biais dudit capteur de comptage à distance la durée d'excitation de la bobine de chauffage par induction à chaque fois que ladite étiquette d'identification est déclenchée.

4. Procédé selon la revendication 1, dans lequel ladite étiquette d'identification est un identifiant de ladite bobine de chauffage par induction, et comportant par ailleurs l'étape consistant à : émettre par le biais dudit identifiant un signal destiné à déclencher ledit capteur de comptage à distance pour contrôler la durée d'excitation de la bobine de chauffage par induction à chaque fois que ladite bobine de chauffage par induction est soumise à un cycle.

5. Procédé selon la revendication 1 permettant de contrôler la durée d'excitation par cycle attribuable à une bobine de chauffage par induction d'un ensemble de bobine de chauffage par induction, ledit ensemble comportant une alimentation électrique et un sous-ensemble de bobine de chauffage par induction comprenant ladite bobine de chauffage par induction et une barre omnibus connectant ladite bobine à ladite alimentation électrique, le procédé comportant par ailleurs les étapes consistant à :
mettre en oeuvre un sous-ensemble de bobine de chauffage par induction dans lequel ledit capteur de comptage à distance comporte un capteur destiné à recevoir et à sortir des données de comptage ;
émettre par le biais de ladite étiquette d'identification un signal destiné à déclencher ledit capteur de comptage à distance pour contrôler la durée d'excitation de la bobine de chauffage par induction à chaque fois que ladite bobine de chauffage par induction est soumise à un cycle, dans lequel ledit capteur de comptage à distance contrôle la durée d'excitation de la bobine de chauffage par induction à chaque fois que ladite bobine de chauffage par induction est soumise à un cycle quand ledit champ magnétique est généré au niveau de ladite bobine ;
maintenir ladite bobine à l'intérieur dudit sous-ensemble de bobine de chauffage par induction et continuer à contrôler la durée d'excitation de la bobine de chauffage par induction à chaque fois que ladite bobine de chauffage par induction est soumise à un cycle de manière consécutive jusqu'à la défaillance de ladite bobine ;
lire lesdites données de sortie dudit capteur de comptage à distance ; dans lequel lesdites données de sortie comprennent la mesure d'un intervalle de temps pour la durée mesurée de la période d'excitation que supporte ladite bobine ; et
établir une durée de vie de base pour ladite bobine en fonction desdites données de sortie.

6. Procédé selon la revendication 5, et comportant par ailleurs les étapes consistant à :
mettre une série de sous-ensembles de bobine de chauffage par induction du même type en oeuvre avec, chacun, ladite étiquette d'identification et ledit capteur de comptage à distance ;
générer un champ magnétique au niveau de chaque bobine desdits sous-ensembles de bobine de chauffage par induction ;
déclencher chacun desdits capteurs de comptage à distance quand ledit champ magnétique est généré, ladite étiquette d'identification émettant un signal destiné à déclencher ledit capteur de comptage à distance ;
maintenir chacune desdites bobines à l'intérieur desdits sous-ensembles de bobine de chauffage par induction et continuer à contrôler la durée d'excitation de chacune desdites bobines de chauffage par induction à chaque fois que ladite bobine de chauffage par induction est soumise à un cycle de manière consécutive jusqu'à la défaillance de chacune desdites bobines ;
lire lesdites données de sortie de chacun desdits capteurs de comptage à distance ; dans lequel lesdites données de sortie comprennent la mesure d'un intervalle de temps pour la durée mesurée de la période d'excitation que supportent lesdites bobines ; et
établir une durée de vie de base moyenne pour lesdites bobines du même type en fonction desdites données de sortie.

7. Procédé selon la revendication 6, et comportant par ailleurs les étapes consistant à :
une fois que ladite durée de vie de base moyenne est établie pour lesdites bobines du même type, remplacer au moins l'une desdites bobines par une nouvelle bobine du même type lors de ladite défaillance, dans lequel ladite nouvelle bobine comporte une étiquette d'identification et un capteur de comptage à distance destiné à recevoir et à sortir des données de comptage ;
contrôler ladite durée d'excitation à chaque fois que ladite bobine de chauffage par induction est soumise à un cycle de manière consécutive et que supporte ladite bobine de rechange par la lecture desdites données de sortie ; et
recommander le remplacement de ladite bobine de rechange avant la défaillance de ladite bobine si ladite mesure d'un intervalle de temps pour la durée mesurée de la période d'excitation se trouve dans les limites d'une gamme prédéterminée de ladite durée de vie de base moyenne pour lesdites bobines du même type.

8. Procédé permettant de contrôler la durée d'excitation par cycle attribuable à une bobine de chauffage par induction d'un ensemble de bobine de chauffage par induction comportant une alimentation électrique et un sous-ensemble de bobine de chauffage par induction comportant ladite bobine de chauffage par induction et une barre omnibus connectant ladite bobine de chauffage par induction à ladite alimentation électrique, dans lequel une durée de vie de base moyenne pour ladite bobine de chauffage par induction a été établie selon la revendication 6 ou la revendication 7, le procédé comportant les étapes consistant à :
mettre ledit sous-ensemble de bobine de chauffage par induction en oeuvre avec une étiquette d'identification et un capteur de comptage à distance ; dans lequel ladite étiquette d'identification est un identifiant de ladite bobine de chauffage par induction et dans lequel ledit capteur de comptage à distance comporte un capteur destiné à recevoir et à sortir des données de comptage ;
générer un champ magnétique au niveau de ladite bobine ;
déclencher ledit capteur de comptage à distance quand ledit champ magnétique est généré ; ladite étiquette d'identification émettant un signal destiné à déclencher ledit capteur de comptage à distance, dans lequel ledit capteur de comptage à distance contrôle la durée d'excitation de la bobine de chauffage par induction à chaque fois que ladite bobine de chauffage par induction est soumise à un cycle quand ledit champ magnétique est généré au niveau de ladite bobine ;
lire lesdites données de sortie dudit capteur de comptage à distance ; dans lequel lesdites données de sortie comprennent la mesure d'un intervalle de temps pour la durée mesurée de la période d'excitation que supporte ladite bobine ;
contrôler ladite durée d'excitation à chaque fois que ladite bobine de chauffage par induction est soumise à un cycle de manière consécutive et que supporte ladite bobine de rechange par la lecture desdites données de sortie ; et
recommander le remplacement de ladite bobine de rechange avant la défaillance de ladite bobine si ladite mesure d'un intervalle de temps pour la durée mesurée de la période d'excitation se trouve dans les limites d'une gamme prédéterminée de ladite durée de vie de base moyenne pour lesdites bobines du même type.

9. Procédé permettant de contrôler le nombre de cycles attribuables à une bobine d'induction comportant les étapes consistant à :
mettre une bobine de chauffage par induction en oeuvre avec une étiquette d'identification et un capteur de comptage à distance ;
générer un champ magnétique au niveau de ladite bobine ; et
déclencher ledit capteur de comptage à distance quand ledit champ magnétique est généré.

10. Procédé selon la revendication 9, dans lequel ledit capteur de comptage à distance comporte un capteur destiné à recevoir et à sortir des données de comptage.

11. Procédé selon la revendication 10, et comportant par ailleurs l'étape consistant à :
compter par le biais dudit capteur de comptage à distance de manière consécutive à chaque fois que ledit capteur est déclenché.

12. Procédé selon la revendication 9, dans lequel ladite étiquette d'identification est un identifiant de ladite bobine de chauffage par induction, et comportant par ailleurs l'étape consistant à : émettre par le biais dudit identifiant un signal destiné à déclencher ledit capteur de comptage à distance à chaque fois que ladite bobine d'induction est soumise à un cycle.

13. Procédé selon la revendication 9 permettant de contrôler le nombre de cycles attribuables à une bobine d'induction d'un ensemble de bobine d'induction, ledit ensemble comportant une alimentation électrique et un sous-ensemble de bobine d'induction comprenant ladite bobine d'induction et une barre omnibus connectant ladite bobine à ladite alimentation électrique, le procédé comportant par ailleurs les étapes consistant à :
mettre en oeuvre un sous-ensemble de bobine de chauffage par induction dans lequel ledit capteur de comptage à distance comporte un capteur destiné à recevoir et à sortir des données de comptage ;
émettre par le biais de ladite étiquette d'identification un signal destiné à déclencher ledit capteur de comptage à distance pour compter de manière consécutive un cycle à chaque fois que ledit champ magnétique est généré au niveau de ladite bobine ;
maintenir ladite bobine à l'intérieur dudit sous-ensemble de bobine d'induction et continuer à compter de manière consécutive lesdits cycles jusqu'à la défaillance desdites bobines ;
lire lesdites données de sortie dudit capteur de comptage à distance ; dans lequel lesdites données de sortie comprennent le nombre total de cycles consécutifs que supporte ladite bobine ; et
établir une durée de vie de base pour ladite bobine en fonction desdites données de sortie.

14. Procédé selon la revendication 13, et comportant par ailleurs les étapes consistant à :
mettre une série de sous-ensembles de bobines d'induction du même type en oeuvre avec, chacun, ledit capteur de comptage à distance ;
générer un champ magnétique au niveau de chaque bobine desdits sous-ensembles de bobine d'induction ;
déclencher chacun desdits capteurs de comptage à distance quand ledit champ magnétique est généré ;
maintenir chacune desdites bobines à l'intérieur desdits sous-ensembles de bobine d'induction et continuer à compter de manière consécutive lesdits cycles jusqu'à la défaillance de chacune desdites bobines ;
lire lesdites données de sortie de chacun desdits capteurs de comptage à distance ; dans lequel lesdites données de sortie comprennent le nombre total de cycles consécutifs que supporte chacune desdites bobines ; et
établir une durée de vie de base moyenne pour lesdites bobines du même type en fonction desdites données de sortie.

15. Procédé selon la revendication 14, et comportant par ailleurs les étapes consistant à :
une fois que la durée de vie de base moyenne est établie pour lesdites bobines du même type, remplacer au moins l'une desdites bobines par une nouvelle bobine du même type lors de ladite défaillance, dans lequel ladite nouvelle bobine comporte une étiquette d'identification et un capteur de comptage à distance destiné à recevoir et à sortir des données de comptage ;
contrôler lesdits cycles consécutifs que supporte ladite bobine de rechange par la lecture desdites données de sortie ; et
recommander le remplacement de ladite bobine de rechange avant la défaillance de ladite bobine si lesdits cycles se trouvent dans les limites d'une gamme prédéterminée de ladite durée de vie de base moyenne pour lesdites bobines du même type.

16. Procédé permettant de contrôler le nombre de cycles attribuables à une bobine d'induction d'un ensemble de bobine d'induction comportant une alimentation électrique et une bobine d'induction d'un ensemble de bobine d'induction comportant une alimentation électrique et un sous-ensemble de bobine d'induction comportant ladite bobine d'induction et une barre omnibus connectant ladite bobine d'induction à ladite alimentation électrique, dans lequel une durée de vie de base moyenne pour ladite bobine d'induction a été établie selon la revendication 14 ou la revendication 15, le procédé comportant les étapes consistant à :
mettre un sous-ensemble de bobine d'induction en oeuvre avec une étiquette d'identification et un capteur de comptage à distance ; dans lequel ledit mécanisme de comptage comporte un capteur destiné à recevoir et à sortir des données de comptage ;
générer un champ magnétique au niveau de ladite bobine ;
déclencher ledit capteur de comptage à distance quand ledit champ magnétique est généré ; dans lequel ledit capteur de comptage à distance compte de manière consécutive un cycle à chaque fois que ledit champ magnétique est généré au niveau de ladite bobine ;
lire lesdites données de sortie dudit capteur de comptage à distance ; dans lequel lesdites données de sortie comprennent le nombre total de cycles consécutifs que supporte ladite bobine ;
contrôler lesdits cycles consécutifs que supporte ladite bobine par la lectures desdites données de sortie ; et
recommander le remplacement de ladite bobine avant la défaillance de ladite bobine si lesdits cycles se trouvent dans les limites d'une gamme prédéterminée de ladite durée de vie de base moyenne pour lesdites bobines du même type.

17. Procédé selon la revendication 7 ou la revendication 16, comportant par ailleurs l'étape consistant à :
remplacer ladite bobine de rechange par une nouvelle bobine ayant une étiquette d'identification et un capteur de comptage à distance destiné à recevoir et à sortir des données de comptage.

18. Procédé selon la revendication 8 ou la revendication 16, dans lequel ledit capteur de comptage à distance est déclenché par un changement de tension en travers du sous-ensemble de bobine d'induction quand ladite alimentation électrique est activée ; ou
dans lequel ledit capteur de comptage à distance est déclenché par l'un quelconque des événements suivants quand ledit champ magnétique est généré au niveau de ladite bobine d'induction : une différence de température, une différence d'intensité de courant, une différence de fréquence, ou une différence de champ magnétique entraînant un effet Hall.

19. Procédé selon la revendication 8 ou la revendication 16, comportant par ailleurs l'étape consistant à :
remplacer ladite bobine de rechange par une nouvelle bobine ayant un capteur de comptage à distance comprenant un capteur destiné à recevoir et à sortir des données de comptage.

20. Procédé selon l'une quelconque des revendications 2 à 4 ou des revendications 10 à 12, et comportant par ailleurs l'étape consistant à :
lire lesdites données de comptage provenant dudit capteur de comptage à distance.

21. Procédé selon la revendication 5 ou la revendication 13, dans lequel ladite étiquette d'identification est attachée de manière libérable à ladite bobine d'induction, comportant par ailleurs l'étape consistant à :
remplacer ladite bobine de rechange par une nouvelle bobine ayant une étiquette d'identification et un capteur de comptage à distance comprenant un capteur destiné à recevoir et à sortir des données de comptage.

22. Procédé selon l'une quelconque des revendications 2, 5, 8, 10, 13 ou 16, dans lequel ladite étiquette d'identification est attachée de manière libérable à ladite bobine d'induction ; ou
dans lequel ladite étiquette d'identification est encastrée dans ladite bobine d'induction ; ou
dans lequel ladite étiquette d'identification est située dans les limites d'une zone déclenchable de la bobine d'induction.
